Europäisches Patentamt

European Patent Office

Office européen des brevets

(11) Veröffentlichungsnummer: **0 431 525 A2**

# (12) EUROPÄISCHE PATENTANMELDUNG

(21) Anmeldenummer: 90123113.4

(22) Anmeldetag: 05.10.84

(51) Int. Cl.5: **G01G 11/14**, G01G 11/00, G01F 1/76

Diese Anmeldung is am 03 - 12 - 1990 als Teilanmeldung zu der unter INID-Kode 60 erwähnten Anmeldung eingereicht worden.

(30) Priorität: 06.10.83 CH 5437/83
30.11.83 DE 3343349

(43) Veröffentlichungstag der Anmeldung:
**12.06.91 Patentblatt 91/24**

(60) Veröffentlichungsnummer der früheren Anmeldung nach Art. 76 EPÜ: **0 256 222**

(84) Benannte Vertragsstaaten:
**AT BE CH DE FR GB IT LI SE**

(71) Anmelder: **BÜHLER AG**

**CH-9240 Uzwil(CH)**

(72) Erfinder: **Gmuer, Bruno**
**Boppartstrasse 12**
**CH-9104 St. Gallen(CH)**

(74) Vertreter: **EGLI-EUROPEAN PATENT ATTORNEYS**
**Widenmayerstrasse 5**
**W-8000 München 22(DE)**

(54) Durchlaufwaage zum Erfassen des Durchsatzes von in einer Getreidemühle verarbeiteten schüttbaren Nahrungsmitteln.

(57) Durchlaufwaage zum Erfassen des Durchsatzes eines durch eine schräge Förderleitung fließenden Stromes von in einer Getreidemühle verarbeiteten schüttbaren Nahrungsmitteln mit
einem Zuführleitungsabschnitt (71),
einem dem Zuführleitungsabschnitt (71) im Abstand nachgeordneten Wägeabschnitt (73) und
einem dem Wägeabschnitt (73) im Abstand nachgeordneten Abführleitungsabschnitt (72), wobei
die drei Abschnitte (71, 73, 72) in die Förderleitung eingebaut oder selbst als Teil der Förderleitung ausgestaltet sind, derart, daß deren Mittelachsen und die Mittelachse der Förderleitung parallel zueinander ausgerichtet sind, insbesondere zusammenfallen.

Eine derartige Durchlaufwaage kann direkt, sogar nachträglich, in bereits bestehende Siloanlagen mit Mehrfachzellen ohne Vorsehen einer Extrahöhe eingebaut werden, etwa in die Siloausläufe.

Fig. 1

# DURCHLAUFWAAGE ZUM ERFASSEN DES DURCHSATZES VON IN EINER GETREIDEMÜHLE VERARBEITE-TEN SCHÜTTBAREN NAHRUNGSMITTELN

## Technisches Gebiet:

Der vorliegende Erfindungsgegenstand wurde von der EP-A2-256 222 abgetrennt, die ihrerseits von der Stammanmeldung EP-A1- 140 213 abgetrennt wurde. Er bezieht sich - wie die EP-A2-256 222 - auf eine Durchlaufwaage zum Erfassen des Durchsatzes eines durch eine Förderleitung fließenden Stromes von in einer Getreidemühle verarbeiteten schüttbaren Nahrungsmitteln mit: einem Zuführleitungsabschnitt, einem dem Zuführleitungsabschnitt im Abstand nachgeordneten Wägeabschnitt und einem dem Wägeabschnitt im Abstand nachgeordneten Abführleitungsabschnitt.

## Zugrundeliegender Stand der Technik:

In der Praxis stellt sich häufig bei Getreidemühlen die Notwendigkeit, den Durchsatz von dort verarbeiteten schüttbaren Nahrungsmitteln in einer Transportleitung aus unterschiedlichen Gründen zu erfassen. So kann z.B. das Erfordernis bestehen, über eine bestimmte Verarbeitungszeit hinweg die genaue durchgeflossene Schüttgutmenge zu erfassen, oder auch den Schüttgutstrom im Hinblick auf einen genauen zeitlichen Durchsatz zu steuern. Hierfür sind bislang im wesentlichen Schüttwaagen und Bandwaagen zur Verfügung gestanden. Wenn es sich um rein innerbetriebliche Vorgänge handelte, so wurden vielfach keine all zu großen Anforderungen an die Qualität der Messungen gestellt. Allerdings ist meistens zu fordern, daß der Schüttgutstrom möglichst nicht oder nicht während längerer Zeit wegen der Messung unterbrochen werden soll. Im Bereich von Getreidemühlenanlagen wurden gerade in neuerer Zeit in größerer Stückzahl Impulsmeßgeräte eingesetzt, wie sie z.B. aus der DE-C-2609167 oder aus der DE-C-2342668 (Offenlegungstag 7.3.74) bekannt sind.

Ein auf eine konventionelle Waage herabfallender Schüttgutstrom ergibt zunächst keinen für die Vermessung sogleich brauchbaren Meßwert, da es ohne spezielle Einrichtungen nicht möglich ist, den von der Waage erfaßten Impulsanteil des fallenden Schüttgutstromes, der auch über der Zeit gesehen Schwankungen unterworfen ist, exakt von dem bereits auf der Waage befindlichen Gewichtsanteil der Schüttgutmasse zu trennen. Bei den bekannten Verfahren zur Messung des Durchsatzes mittels Impulsmeßgeräten wird der senkrecht herabfallende Schüttgutstrom abgelenkt. Durch die Umlenkung ergibt sich eine horizontale Kraftkomponente, die proportional der jeweils augenblicklich auf die Ablenkplatte herabfallenden Schüttgutmenge ist, weshalb die Messung dieser Kraftkomponente einen Rückschluß auf den Durchsatz des Schüttgutes zuläßt. Mit einem solchen Meßsignal kann dann der Schüttgutdurchsatz über entsprechend gekoppelte Dosiergeräte auf einen gewünschten Wert eingestellt werden. Der Vorteil dieses bekannten Meßverfahrens ist darin zu sehen, daß der kontinuierliche Fluß des Schüttgutstromes auch durch die Messung nicht unterbrochen wird und der Produktfluß so, wie er auf das Meßgerät affällt, weitergegeben werden kann. Zusätzlich sind die Herstellkosten solcher Impulsmeßgeräte gegenüber denen bisheriger Waagensysteme, etwa der Chargen- oder Bandwaagen, wesentlich geringer. Die Impulsmeßverfahren haben aber den Nachteil, daß ihre Genauigkeit jedoch nicht all zu groß ist. Einflußfaktoren wie Luft- oder Materialfeuchtigkeit, Temperatur usw. können dabei meßtechnisch kaum eliminiert werden, so daß in der Praxis mit Meßwertstoleranzen in einem Bereich von ± 1% gerechnet werden muss. Bei extremen Schwankungen des Reibverhaltens zwischen Produkt und Ablenkplatte kann die Fehlanzeige sogar mehr als 1 % betragen.

Das Bestreben, möglichst auch in größeren Getreidemühlen den Schüttguttransport durch elektronische Rechner zu steuern und zu überwachen, läßt allerdings die Verwendung von Meßwerten mit solchen Fehlertoleranzen nicht mehr zu. So entspricht bei einer Mühle mit einer Tagesleistung von z.B. 500 t eine Fehlanzeige im Bereich von 1 % einem reellen Schüttgutfehler von insgesamt 5 t, was die Möglichkeit einer Rechnersteuerung einer solchen Mühle völlig in Frage stellen müßte.

In der DE-A-960 132 ist ein Verfahren zur Durchsatzmessung eines Schüttgutstromes beschrieben, bei dem das herabfallende Schüttgut aus der Förderleitung in einen Bypass umgelenkt und dort in eine innerhalb eines Rohrquerschnittes angeordnete Waage eingeleitet wird. Die Waage weist einen verklappbaren Boden auf, der zunächst den Querschnitt des Waagenbehälters nach unten hin verschließt, so daß das herabfallende Produkt auf dem Boden aufgestapelt wird. Die Umlenkklappe, die das Schüttgut aus der Haupt- in die Bypassleitung der Waage umlenkt, ist mit einem Zeitwerk derart gekoppelt, daß nach einer bestimmten vorgegebenen Zeit die Einleitung des Produktes in den Bypass wieder aufgehoben und die Hauptleitung freigegeben wird. Die Waage ist mit einer Vorrichtung zur Anzeige des eingespeisten Gewichtes verbunden, so daß die Bedienungsperson von dieser ablesen kann, welche Schüttgutmenge innerhalb des bekannten und vorgegebenen Zeitintervals in den Verwägebehälter eingeleitet wurde, woraus sich dann auch unmittelbar der Durchsatz in der Haupttransportleitung ergibt. Anschließend kann mechanisch der Boden der Waagen wieder geöffnet, das darin enthaltene Produkt ausgelassen, der Boden erneut geschlossen und dann der Vorgang wiederholt werden. Diese vorbekannte Vorrichtung ist zwar grundsätzlich geeignet, Messwerte zu liefern, die einen Rückschluss auf den Produktdurchsatz zulassen, sie weist jedoch Nachteile auf. So ist zunächst für die Durchführung der Wägung eine Umschaltung des Schüttgutzulaufes zwischen der hauptleitung und der Bypassleitung notwendig, was grundsätzlich unerwünscht ist. Des weiteren ist das bekannte Verfahren auch sehr langsam, da es von einem mechanischen Wägesystem Gebrauch macht, das seinerseits mit relativ langen Verwägezeiten arbeiten muss, die vom Taktspiel der mechanischen Schieber zum Ein- bzw. Ausleiten des Hauptstromes abhängig sind, was alles mit einer relativ langen Taktzeit des gesamten Vorgangs verbunden ist, deren Dauer nicht mehr abgesenkt werden kann. Hinzu kommt auch eine unzureichende Wägegenauigkeit, da das Wägebehälter-Tara-Gewicht als Störgrösse nicht ausreichend berücksichtigt wird. Haftet etwa Produkt am Wägebehälter bereits zu Beginn des Waagevorgangs zn, so ergibt sich ein variables Anfangsgewicht, das nicht vernachlässigt werden kann, dessen Variabilität aber bei der Emittlung des Verwägungswertes unberücksichtigt bleibt. Auch dieser Stand der Technik ist nicht geeignet, dass man aus ihm abgeleitete Messwerte für die Computersteuerung einer gesamten grösseren Mühlenanlage einsetzen könnte, etwa für das exakte Mischen von verschiedenen Produktqualitäten oder über die Produktmengen Arbeitsabläufe zu steuern.

Aus der US-Ps 3 853 190 ist es bekannt, eine Schüttgut-oder Fördreleitung an eine Schüttgutdurchlaufwaage heran und dannach von dieser wieder wegzuführen. Die Schüttgutdurchlaufwaage weist dabei im wesentlichen folgende Abschnitte auf: einen Zufürhabschnit in Form eines von der Horizontalen schräg nach unten abgewinkelten schlanken Rohres, einen im Abstand vom Zufürhabschnitt angeordneten Wägeabschnitt in Form eines vertikal angeordneten Wägegefäßes und einen im Abstand vom Wägeabschnitt angeordneten Abführabschnitt in Form eines Sammeltrichters. Die Förderleitung wird nun in der Weise, an die Schüttgutdurchlaufwaage herangeführt und von dieser wieder weggeführt, daß sie zwei horizontal verlaufende Endabschnitte aufweist, die beide von derselben Seite der an die Schüttgutdurchlaufwaage herangeführt sind. Dabei haben die beiden horizontalen Endabschnitte einen vertikalen Abstand voneinander, der der vertikalen Ausdehnung der Durchlaufwaage entspricht. Der eine horizontale Endabschnitt mündet dabei in das obere Ende des schräg nach unten gerichteten Zuführabschnittes, während der andere horizontale Endabschnitt an den Ausgang des vertikalen Sammeltrichters herangeführt und zusätzlich noch mit einem Schnekkenaustrag bestückt ist. Die Förderleitung muß sozusagen von ihrer eigentlichen Förderrichtung abweichen und zu Meßzwecken einen Umweg über die Durchlaufwaage machen. Im übrigen ist im Auslaßbereich des Wägeabschnittes noch ein Verschlußorgan angeordnet, das mit dem Wägeabschnitt verbunden und mittels einer Steuereinrichtung in eine Schließ- und eine Offenstellung bringbar ist. Schließlich hängt der Wägeabschnitt an Gewichtserfassungsmitteln. Die bekannte Vorrichtung hat den Vorteil, daß mit ihr das zu verwiegende Gut mit Waagegenauigkeit gemessen werden kann, jedoch nur dann, wenn sie im Chargenbetrieb arbeitet.

Offenbarung der Erfindung:

Ausgehend hiervon liegt der Erfindung die Aufgabe zugrunde, eine Vorrichtung für die Erfassung des Durchsatzes eines durch eine Förderleitung fließenden Stromes von in einer Getreidemühle verarbeiteten schüttbaren Nahrungsmitteln zu finden, die eine Bestimmung des Produktdurchsatzes mit einer Genauigkeit von weniger als ± 2‰ ermöglicht und auch bei ununterbrochener Produktzuführung einsetzbar ist, durch die somit die Genauigkeit von Industriewaagen erreicht wird, so dass auch für eine computergesteuerte Produktfluss-Ueberwachung eine ausreichende Genauigkeit der ermittelten Messwerte gegeben ist; dabei soll aber dennoch gleichzeitig der Aufwand gering gehalten werden.

Erfindungsgemäß wird diese Aufgabe bei einer Durchlaufwaage der eingangs genannten Art dadurch gelöst, daß die Förderleitung gegen die Vertikale geneigt (schräg) angeordnet ist und die drei Abschnitte in die Förderleitung eingebaut oder selbst als Teil der Förderleitung ausgestaltet sind, derart, daß deren Mittelachsen und die Mittelachse der Förderleitung parallel zueinander ausgerichtet sind, insbesondere zusammenfallen.

Die erfindungsgemässe Vorrichtung ist offensichtlich einfach aufgebaut und erfordert auch nur relativ kleine Abmessungen . Die zum Beispiel bei Bandwaagen erforderliche, relativ lange horizontale Ausdehnung, entfällt, wodurch sich nicht nur eine erhebliche Platzeinsparung, sondern auch ein vergleichsweise geringer Aufwand bei der Herstellung ergibt. Sie weist auch den großen Vorteil auf, daß sie wegen ihrer Ausgestaltung als Leitungsabschnitt einer schrägen Förderleitung selbst eine besonders platzsparende und günstige Einsetzbarkeit in bereits vorhandene schräge Förderleitungen ermöglicht. Dabei wird dann auch der Wägeabschnitt in einer der Schräge der Schüttgutleitung entsprechenden Schräge eingebaut, da die Mittelachsen der drei Abschnitt der Schüttgutdurchlaufwaage und der Förderleitung selbst parallel zueinander ausgerichtet sind, insbesondere zusammenfallen. Eine solche schräge Einbaumöglichkeit ergibt den Vorteil, daß ein direkter, sogar nachträglicher Einbau in bereits bestehende Siloanlagen mit Mehrfachzellen ohne Vorsehen einer extra Höhe erfolgen kann.

Bevorzugt ruht der Wägeabschnitt auf elektronischen Gewichtserfassungsmitteln oder ist daran aufgehängt und ist im Auslaßbereich des Wägeabschnittes ein mit ihm verbundenes und von ihm gehaltenes verstellbares Verschlußorgan derart ausgebildet und angeordnet, daß es in eine dem Aulaßbereich des Wägeabschnittes verschließende Stellung und in eine einen ungehinderten Nahrungsmittelaustritt gewährleistende Offenstellung bringbar ist. Hierdurch läßt sich eine rasche Messung, aber auch Steuerung, der Durchsatzleistung durch die Durchlaufwaage erreichen, ebenso wie in der bereits eingang genannten Stammanmeldung EP-A1- 140 213 oder Trennanmeldung EP-A2-256 222.

Besonders bevorzugt wird bei einer erfindungsgemäßen Vorrichtung der Wägeabschnitt mit einem zylindrischen Durchlaufraum versehen, dessen Höhe 1,5 bis 5 mal seinem Durchmesser entspricht.

Bei einer weiteren vorteilhaften Ausgestaltung der erfindungsgemäßen Durchlaufwaage ist das Verschlußorgan als verschieb-oder verschwenkbarer Abschlußschieber ausgebildet, der vorzugsweise über einen pneumatischen Zylinder betätigt wird, der seinerseits über einen elektro-pneumatischen Wandler von einem Rechner angesteuert wird. Hierdurch kann der Schieber mit einer steuerbaren Oeffnungsgeschwindigkeit bewegt werden, was in jedem Fall eine Vergleichmässigung der Gutabgabe nach Beendigung eines Wägezyklusses erreichen lässt.

Eine andere vorteilhafte Ausgestaltung der erfindungsgemäßen Durchlaufwaage besteht auch darin, daß eine Dosiereinrichtung im Zuführleitungsabschnitt der Waage vorgesehen und mit einem Vorgabegerät zur Einstellung einer vorwählbaren kontinuierlichen Durchsatzleistung verbunden ist, wobei, wiederum vorzugsweise, ein Rechner zur Ansteuerung dieses Vorgabegerätes vorgesehen sein kann, der vom Ausgang dre Einrichtung zur Ermittlung des Durchsatzes des in der Waage befindlichen Schüttgutes angesteuert wird,und wobei Rechner, Vorgabegerät, Dosiereinrichtung und Einrichtung zur Ermittlung des Durchsatzes eine Durchsatzregeleinrichtung ausbilden. Dabei läßt sich die Dosiereinrichtung für leicht fließfähige Schüttgüter in vorteilhafter Weise als Drehschieber ausbilden, während sie bei schwerfließfähigen Schüttgütern mit besonderem Vorteil als Dosierschnecke ausgeführt ist.

Es ist weiterhin von Vorteil, wenn bei der erfindungsgemäßen Durchlaufwaage der Abschnitt unmittelbar über und der Abschnitt unmittelbar unter dem Wägeabschnitt über ein seitliches Druckausgleichsrohr frei miteinander verbunden sind.

Anwendungsmöglichkeiten der erfindungsgemäßen Durchlaufwaage sind in der Stammanmeldung, nämlich der EP-A-0140213 ausführlich beschrieben. Zur Vermeidung von Wiederholungen wird hinsichtlich der Anwendungsmöglichkeiten der erfindungsgemäßen Durchlaufwaage ausdrücklich auf die genannte Stammanmeldung verwiesen.

Die Erfindung wird nachfolgend anhand der Zeichnung im Prinzip beispielshalber noch näher erläutert. Es zeigen:

Fig. 1 eine Prinzipdarstellung der Anordnung der erfindungsgemäßen Durch laufwaage mit der Möglichkeit einer Schiebersteuerung für die Zuführleitung.

Fig. 2 den Verlauf des gemessenen Schüttgutgewichtes pro Zeiteinheit während eines Wägezyklusses bei einer erfindungsgemäßen Durchlaufwaage;

Fig. 3 eine diagrammatische Darstellung der Aufeinanderfolge mehrerer Referenzzeitabschnitte innerhalb des linearen Meßwertanstiegs der Waage (während eines Wägezyklusses);

Fig. 4 ein Schaltschema zur Messung der Kräfte, die an einem in der Durchlaufwaage eingesetzen elektronischen Gewichtserfassungsmittel angreifen;

Fig. 5 eine Darstellung elektronischer Gewichtserfassungsmittel in Gestalt eines Dehnmeßstreifen-Wägebalkens.

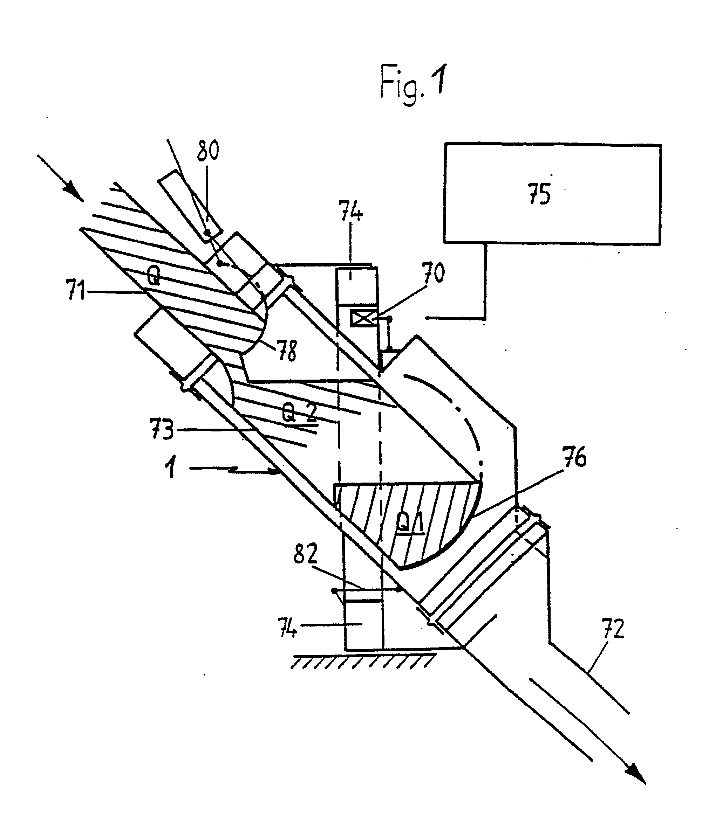

Die in Fig. 1 schematisch dargestellte Durchlaufwaage weist als wesentliches Element einen im folgenden Rohrwaage 1 genannten Abschnitt auf. Die Rohrwaage 1 enthält einen rohrförmigen Waagebehälter 73. Die Rohrwaage 1 ist zwischen die Enden einer schräg verlaufenden Förderleitung geschaltet. Das obere Ende der Förderleitung ist als Zuführleitung 71 dargestellt. Diese Zuführleitung 71 mündet in den Waagebehälter 73. Die Rohrwaage 1 ihrerseits mündet in einen darunterliegenden Endabschnitt der Förderleitung, im folgenden Abführleitung 72 genannt. Die Zuführleitung 71, der Wägeabschnitt 73 und die Abführleitung 72 haben einen gegenseitigen Abstand voneinander. Deren Mittelachsen sind parallel zueinander ausgerichtet oder fluchten miteinander, d.h. fallen zusammen.

In der Zuführleitung 71 kommt der Produktstrom Q vor der Rohrwaage 1 an. Das Ende der Zuführleitung 71 weist einen Regulierschieber 78 auf, der mittels eines Motors 80 in seiner Lage verstellt werden kann. Hierdurch ist es möglich, den in den Waagenbehälter 73 eintretenden Gutstrom nach Wunsch einzustellen.

Unten am Waagenbehälter 73 ist ein Abschlußschieber 76 vorgesehen, der neben seiner geschlossenen in Fig.1 voll ausgezeichneten Stellung jeweils in eine seitliche Öffnungsstellung (in Fig.1 strichpunktiert eingezeichnet) zur Freigabe des Waagenbehälters 73 verschwenkt werden kann, wonach dann das im Waagenbehälter 73 aufgehäufte Gut (Q 2) in die Abführleitung 72 abgelassen werden kann.

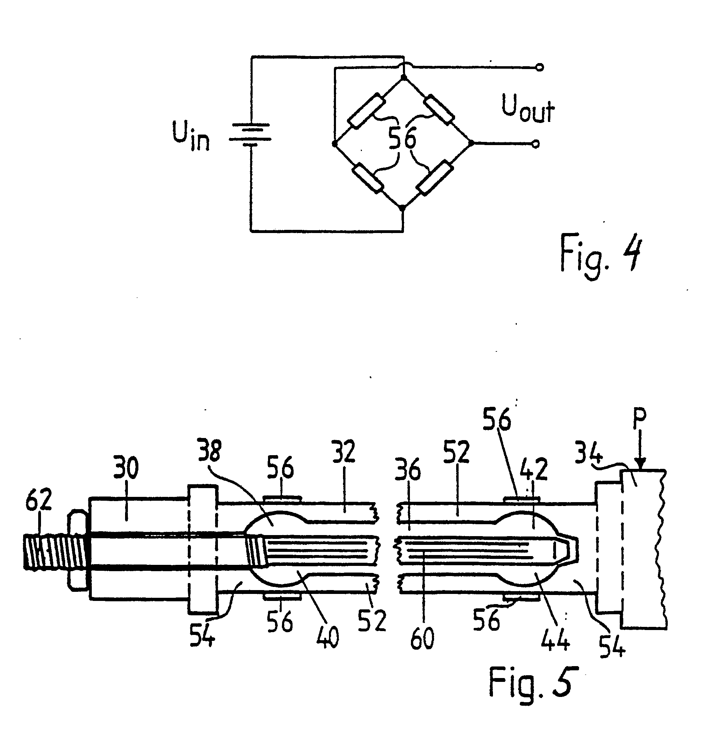

Gemäß Fig. 8 ist ein Ständer 74 vorgesehen, an dem das Gehäuse der Rohrwaage 1 bzw. das Aufnahmegehäuse des Waagenbehälters 73 über eine geeignete Meßeinrichtung 70 befestigt, d.h. abgestützt oder aufgehängt ist. Stabilisatoren 82 sind in geeigneter Form zur Stabilhaltung der Lage der Rohrwaage 1 angeordnet. Als Meßeinrichtung 70 können alle geeigneten Meßeinrichtungen für eine rasche (elektronische) Erfassung der auftretenden Gewichtsunterschiede eingesetzt werden, z.B. eine Dehn meßstreifen-Meßanordnung, wie sie aus den (später noch erläuterten) Fig. 4 und 5 entnehmbar ist.

Es versteht sich von selbst, daß die in den Fig. 1 nur im Prinzip dargestellte Rohrleitungs-Durchlaufwaage mit einer geeigneten elektronischen Einrichtung zum Ausführen erforderlicher Meßwertaufnahmeoperationen, Steuerungs- und Regeloperationen versehen ist. Eine solche Einrichtung ist in Fig. 1 rein prinzipiell dargestellt und mit 75 beziffert. Von dieser Einrichtung sollen, wie im einzelnen nicht dargestellt, alle erforderlichen Signale aufgenommen, verarbeitet und weitergeleitet werden können, weshalb insbesondere die Signalaufnahme vom Meßwertgeber 70, die Ansteuerung des Abschlußschiebers 76 sowie die Ansteuerung des Verstellmotors 80 von der Einrichtung 75 aus in geeigneter Form vorgenommen werden können.

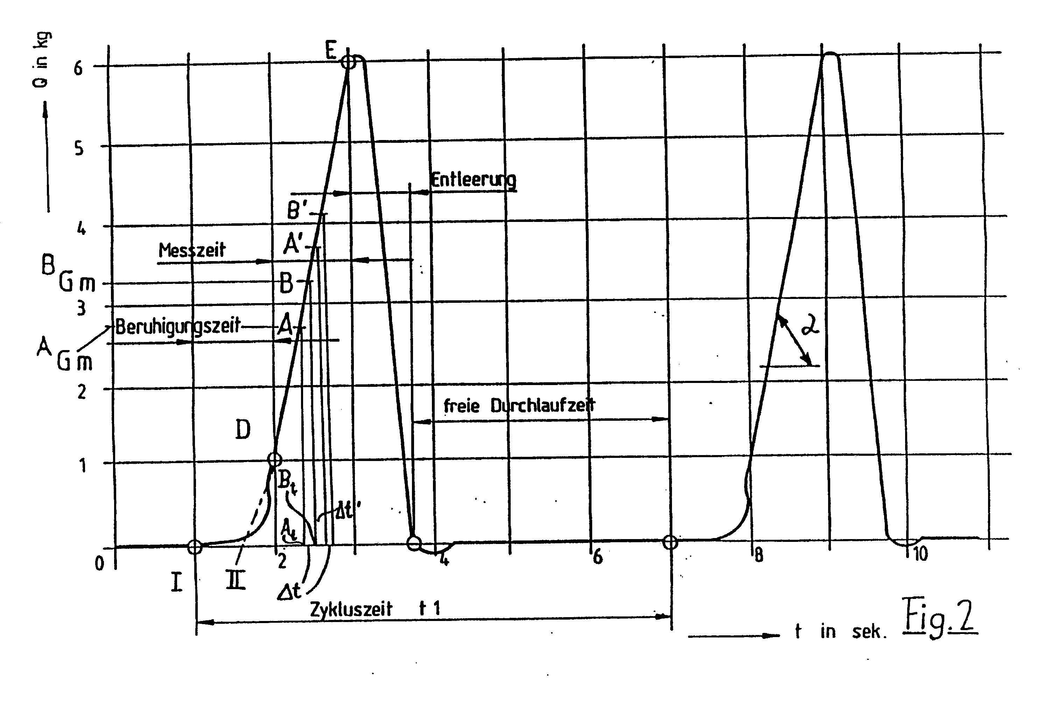

Das in der Zuführleitung 71 angeförderte Produkt Q wird dann der Stellung des Regulierschiebers 78 entsprechend in den Waagenbehälter 73 eingelassen. Wenn dessen Abschlußschieber 76 geschlossen ist, fällt das Produkt auf den Abschlußschieber 76 und wird dort entsprechend dem Zustrom angehäuft. Sobald der Abschlußschieber 76 vollständig geschlossen ist, wird das von der Meßwerteinrichtung 70 laufend abgegebene elektrische Meßsignal, das ein Maß für das jeweils im Waagenbehälter 73 angehäufte Produktgewicht ist, an die Einrichtung 75 abgeleitet und von dieser über der Zeit erfaßt. Zu einem Zeitpunkt, der in (der später noch erlauterten) Fig. 2 dem Zeitpunkt A entsprechen kann, befindet sich eine bestimmte Ausgangsmenge Q 1 im Waagenbehälter 73 angehäuft. Innerhalb eines kurzen Referenzzeitabschnittes Δ t wird nun die Gewichtszunahme des Produktes innerhalb des Waagenbehälters 73 erfaßt, wobei am Ende des Meßzeitraumes die Produktmenge Q 2 im Waagenbehälter 73 enthalten sein soll (die tatsächliche relative Zunahme der Produktmengen Q 1 und Q 2 ist in den Fig. 1 erheblich verzerrt dargestellt, um eine bessere Übersichtlichkeit zu ermöglichen; in Wirklichkeit sind die Niveauunterschiede relativ zueinander sehr viel kleiner. Dieser Vorgang kann sich dann ggf. noch mehrfach wiederholen, bis schließlich aufgrund eines Impulses durch die Einrichtung 75 der Abschlußschieber 76 in seine seitliche Öffnungsstellung gebracht wird, wonach das im Waagenbehälter 75 angehäufte Gut nach unten in die Abführleitung 72 abgegeben wird. Der Schieber 78 bleibt dabei über eine gewisse Zeit geöffnet, wobei in aller Regel eine vollständige Entleerung des Inhalts des Waagenbehälters 73 erfolgen kann. Die Öffnungs- und Schließdauer des Waagenbehälters 73 wird in geeigneter Form Meßvorgaben vorgewählt, über die den gegebenen Einsatzbedingungen entsprechen. Dabei kann auch die Öffnungs- bzw. Schließgeschwindigkeit des Abschlußschiebers 76 unterschiedlich eingestellt oder vorgegeben werden.

In Fig. 2 ist der Verlauf der gemessenen Gewichtszunahme Q (in kg) über der Zeit t bei einer besonderen - hier nicht beanspruchten - Verwendung der Durchlaufwaage dargestellt. Schutz für das hierbei praktizierte Verfahren sowie für die besonderen Merkmale der Verwägesystems zur Durchführung dieses Verfahrens wird in der bereits genannten Stammanmeldung beansprucht.

Der Zeitpunkt I bezeichnet dabei den Schließzeitpunkt des Waagenausganges, d.h. die Vollendung der Schließbewegung des Abschlußschiebers 76. Es wird angenommen, daß ein kontinuierlicher Schüttgutzufluß zur Rohrwaage 1 vorliegt. Mit der Schließung des Abschlußschiebers 76 (Zeitpunkt I) beginnt sich nun der Waagenbehälter 73 zu füllen, wobei das erzeugte Wägesignal entsprechend der Kurve vom Ausgangspunkt I zunächst etwas unregelmäßig und mit erkennbaren Überschwingungen ansteigt, weil hier das gesamte Waagensystem durch den ersten Aufprallimpuls in Schwingungen gebracht wird und deshalb überschwingt. Bei gut ausgebildeter Dämpfung ist jedoch bereits nach kurzer Zeit, im dargestellten Beispiel etwa 1 sek., eine Geruhigung eingetreten, die etwa dem Punkt D entspricht. Vom Punkt D an geginnt nun ein linearer Anstieg der gemessenen Werte bishin zum Punkt E, bei welchem der Abschlußschieber 76 geöffnet wird: entsprechend dem nunmehr erfolgenden Auslaufen des Produktes fällt das Gewicht in der Rohrwaage 1 wieder bis zu seinem Nullwert ab, wonach sich be der Waage infolge der auftretenden Trägheitseffekte sogar kurzzeitig ein negatives Gewichtssignal einstellt. Anschließend bleibt der Abschlußschieber 76 während einer gewissen Zeit geöffnet, bis er wieder geschlossen wird: nach erfolgter Schließung (erneuter Schließzeitpunkt des Waagenausgangs bzw. beendete Schließbewegung des Abschlußschiebers 76) wiederholt sich der ganze Vorgang erneut, was in Fig. 2 dargestellt ist.

Wesentlich für das geschilderte Verfahren ist hierbei, daß im Bereich des linearen Meßwertanstiegs, d.h. im Bereich zwischen dem Beruhigungspunkt D und dem Endpunkt des linearen Gewichtsanstiegs E zu Beginn der Schieberöffnung die für das geschilderte Verfahren erforderlichen Messungen bei gleichzeitiger Zeiterfassung erfolgen. Der Punkt $A_t$ sei nun der dem Meßpunkt A zugeordnete Zeitpunkt, wobei $A_{Gm}$ der hierbei von der Waage gemessene Gewichtsausschlag sein soll. $B_t$ bezeichnet die Zeit, die dem Meßpunkt B zugeordnet ist, und $B_{Gm}$ sei der bei Punkt B festgestellte Meßwertausschlag für das Gewicht ("Gewichtsausschlag"). Eine Ablesung des Meßwertes während des fortgesetzten Zulaufens von Schüttgut erfaßt stets sowohl das Gewicht, wie auch den Impuls des fallenden Produktstromes gleichzeitig. Daher kann eine solche Einzelmessung niemals das absolute Gewicht des im Waagenbehälter 73 momentan aufgehäuften Schüttgutes darstellen.

Innerhalb des bereits genannten linearen Bereiches der gemessenen Gewichtszunahme erfolgt nun eine Messung, etwa zwischen den Punkten A und B, die über einen nur sehr kurzen Referenzzeitabschnitt $\Delta t$ vorgenommen wird. Da es sich hier um einen sehr kurzzeitigen Vorgang handelt, kann davon ausgegangen werden, daß die Impulsänderung zwischen dem Punkt A und dem Punkt B so außerordentlich gering ist, daß sie vernachlässigt werden kann. Hieraus folgt, daß bei der Berechnung der Differenz der Werte $A_{Gm}$ sowie $B_{Gm}$ dann, wenn das Referenzzeitintervall nur sehr kurz gewählt ist, ein Differenzwert auftritt, bei dem der Anteil des von ihm noch erfaßten Impulses an gesamtsignal als vernachlässigbar angesehen werden kann und der somit auch unter der Anforderung großer Genauigkeit als ausreichend genauer Differenzwert für das Differenzgewicht zwischen dem Zeitpunkt $A_t$ und $B_t$ verwendet werden kann.

Bezeichnet man das auf die Zeiteinheit bezogene Gewicht des in die Waage eingeflossenen Schüttgutstromes als "Schüttgutdurchsatz", so ergibt sich dieser aus der Relation zwischen dem ermittelten Differenzwert einerseits und dem Referenzzeitabschnitt andererseits wie folgt, wobei der Ausdruck $\frac{\Delta G}{\Delta t}$ auch als sekundlicher Massestrom = $\dot{m}$ oder aber als Steigungswinkel $\alpha$ (bzw.tan$\alpha$) angegeben werden kann.

$$\frac{B_{Gm} - A_{Gm}}{B_t - A_t} = \frac{\Delta G}{\Delta t}$$

Hierin bezeichnet $\Delta G$ das Differenzgewicht und $\Delta t$ die Dauer des Referenzzeitabschnittes.

Damit ergibt die Vermessung des Kurvenverlaufes innerhalb des Referenzzeitabschnitts $\Delta t$ eine Kurzzeitmessung, aus welcher sehr schnell und mit großer Genauigkeit der Wert des momentanen Schüttgutdurchsatzes unschwer festgestellt werden kann. Dabei besteht die Möglichkeit, wie aus Fig. 2 ebenfalls ersichtlich ist, daß im Bereich des linearen Meßwertanstiegs zwischen den Punkten D und E nicht zur während eines Referenzzeitabschnittes (Punkte A-B), sondern auch während eines weiteren Referenzzeitabschnittes zwischen den Punkten $A'$ und $B'$ zusätzlich eine gleiche Messung vorgenommen wird. Wenn dabei der Referenzzeitabschnitt $\Delta t$ gleich groß wie zwischen den Punkten A und B gewählt wird, kann der Durchsatzwert, der sich aus der zweiten Messung ableiten läßt, mit dem Durchsatzwert aus der Messung während des ersten Referenzzeitabschnittes verglichen und, falls eine Abweichung vorliegt, ein Mittelwert gebildet werden, der dann mit noch größerer Genauigkeit den gemittelten Durchsatz zwischen dem Zeitpunkt $A_t$ und $B'_t$ wiedergibt. Bei Einsatz geeigneter Verwägungssysteme besteht keine Schwierigkeit, innerhalb des linearen Meßwertanstiegs zwischen den Punkten D und E eine Vielzahl solcher Einzelmessungen, jeweils über einen identischen Referenzzeitabschnitt $\Delta t$ ausgeführt, vorzunehmen und nach jeder neuen Messung den vorher bestimmten Durchsatzwert im Rahmen einer erneuten Mittelung zu korrigieren.

Die oben angegebene Messung des Differenzgewichtes $\Delta G$ und der Referenzzeitdauer $\Delta t$ läßt aber über die Berechnung des momentanen Durchsatzwertes hinaus auch noch, falls gewünscht, die Möglichkeit zu, auch die Gesamtfüllung des Waagenbehälters 73 bis zu dessen Entleerung, somit das insgesamt zwischen dem Zeitpunkt I und dem Punkt E in den Waagenbehälter 73 eingespeiste Produktgewicht ebenfalls in großer Genauigkeit zu ermitteln. Denn dies kann unschwer dadurch erfolgen, daß das innerhalb eines Referenzzeitabschnittes gemessene Differenzgewicht $\Delta$ G in geeigneter Weise linear extrapoliert und hochgerechnet wird, so daß die Gewichtsdifferenz zwischen dem Punkt E einerseits und dem Schnittpunkt II der Geraden ds linearen Meßwertanstiegs mit der Abzisse (Zeitachse) andererseits berechnet wird: diese Gewichtsdifferenz ist dann eine sehr genaue Erfassung des Gewichtes des wirklich in den Behälter eingeströmten Schüttgutes, was durch Versuchsergebnisse bestens belegt werden konnte. Im Falle, daß zur Meßwerterfassung eine elektronische Waage eingesetzt wird, mit der gleichzeitig eine integrale Auswertung der Meßwertkurve über der Zeit erfolgen kann, besteht sogar die Möglichkeit, daß durch eine geeignete elektronische Schaltung für die Berechnung des Durchsatzes oder des in den Waagenbehälter eingespeisten Schüttgutgewichts gemessene tatsächliche Kurvenverlauf ersetzt wird durch einen Kurvenverlauf, der aus einer z.B. durch den Punkt E verlaufenden Geraden besteht, bei der das Integral über den Zeitraum, der zwischen ihrem Schnittpunkt mit der Abzisse und dem Punkt E liegt, gleich dem Integral der tatsächlich gemessenen Kurve über den Zeitraum zwischen den Punkten I und E ist.

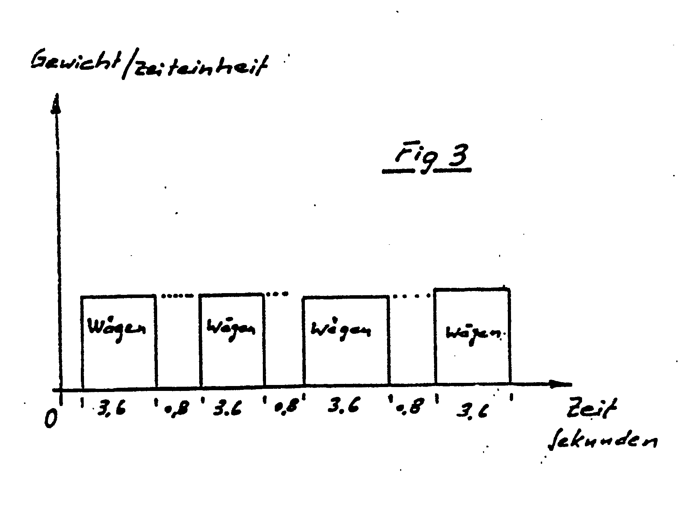

Die Darstellung nach Fig. 3 zeigt die Möglichkeit, innerhalb eines vorgegebenen größeren Zeitraums mehrere Wägevorgänge, d.h. Wägezyklen auszuführen. Dabei können die mit "Wägen" bezeichneten Verwägungen sowohl als vollständige, aufeinanderfolgende Wägezyklen über einen längeren Zeitraum hinweg, als auch als einzelne Referenzzeitabschnitte innerhalb eines einzelnen Wägezyklusses angesehen werden. Die Erhöhung der Einzelmessungen sowohl innerhalb eines Wägezyklusses, als auch innerhalb eines übergeordneten Zeitraums in Form einer Erhöhung der einzelnen Wägezyklen selbst führt zu einer laufend verbesserten und genaueren Bestimmung der gesuchten Werte infolge der Erfassung einer größeren Anzahl einzelner Meßwerte und der Möglichkeit, durch Mittelung dann statistisch verbesserte Werte zu erreichen.

In Fig.5 ist ein Dehnmessstreifen-Wägenbalken im Prinzip gezeigt, der bei der erfindungsgemäßen Durchlaufwaage zur Erfassung der Meßwerte eingesetzt werden kann. Er weist einen starren Träger 30, einen Biegebalken 32 sowie einen Flansch 34 zur Übertragung einer auf ihn wirkenden Kraft P auf. Der Biegebalken 32 besteht dabei aus einem elastischen Material und ist nach Art eines Viergelenksystems ausgebildet. Hierzu weist er einen im Querschnitt hantelförmigen Durchbruch 36 auf, der mittig im Biegebalken 32 insbesondere derart angeordnet ist, daß seine Längsachse mit der Längsachse des Biegebalkens 32 übereinstimmt. Der Mittelteil des hantelförmigen Durchbruchs 36 ist mit einem rechteckigen Querschnitt versehen. Die den "Gewichten" der Hantel entsprechenden Abschnitte weisen dagegen einen kreisförmigen Querschnitt auf. Jeder im Querschnitt kreisförmige Abschnitt des Durchbruches 36 entspricht zwei Gelenkstellen 38 und 40 bzw. 42 und 44: diese Abschnitte werden daher in folgenden "Gelenkstellen 38, 40, 42 bzw. 44" genannt. Bei Einwirkung einer Kraft P au den Flansch 34 verformt sich der Biegebalken 32 im wesentlichen im Bereich seiner vier Gelenkstellen 38 bis 44. Der Biegebalken ist hierbei über seinen Träger 30 ortsfest mit einer starren Basis verbunden.

Der hantelförmige Durchbruch 36 wird in Querrichtung im wesentlichen von zwei symmetrisch zur Biegebalken-Längsachse angeordneten balkenartigen Biegeelementen 52 und in Längsrichtung von zwei Endstücken 54 umgrenztgegenüerliegende Enden der Biegeelemente 52. Der so erhaltene Aufbau des Biegebalkens 32 ist demnach im wesentlichen parallelogrammartig.

An den Stellen der äußeren, einander abgekehrten Oberflächen der Biegeelemente 52, die sich bei Beaufschlagung des Biegebalkens 32 mit einer Kraft P am stärksten verformen, sind elektromechanische Wandlerelemente 56 befestigt. Da dies die Gelenkstellen 38 bis 44 sind, sind die Wandlerelemente 56 auf den Oberhalb bzw. unterhalb der Gelenkstellen befindlichen Abschnitten der äußeren Oberflächen der Biegeelemente 52 befestigt. Vorzugsweise weisen die vier Wandlerelemente 56 Dehnmeßstreifen auf, und zwar zwei von ihnen gegebenenfalls zusätzlich Kompensationswiderstände.

Die Wandlerelemente 56 sind gemäß Fig. 4 in üblicher Weise in einer Brückenschaltung verschaltet. Diese Brückenschaltung wird eingangsseitig von der Spannung $U_{in}$ versorgt und gibt ausgangsseitig ein dem Kraftmeßsignal korrespondierendes Signal $U_{out}$ ab. Die Wandlerelemente 56 können hierbei entweder aus einer Parallelschaltung oder aus einer Serienschaltung eines Kompensationswiderstandes und eines Dehnemßstreifens oder aus einer Kombination bersagter Parallel- und Serienschaltung bestehen.

Die in Fig. 5 gezeigte Vorrichtung weist zusätzlich auch noch einen den Biegebalken 32 bei Überlast abstützenden Sicherungsstab 60 auf, der über sein hinteres Ende 62 mit dem Träger 30 und dem daran befestigten Endstück 54 des Biegebalkens 32 starr verbunden ist. Im übringen ist Zweck und Ausführung des Sicherungsstabes zur weiteren Berschreibung der Erfindung nicht wesentlich.

## Ansprüche

1. Durchlaufwaage zum Erfassen des Durchsatzes eines durch eine Förderleitung fließenden Stromes von in einer Getreidemühle verarbeiteten schüttbaren Nahrungsmitteln mit
a) einem Zuführleitungsabschnitt (71),
b) einem dem Zuführleitungsabschnitt (71) im Abstand nachgeordneten Wägeabschnitt (73) und
c) einem dem Wägeabschnitt (73) im Abstand nachgeordneten Abführleitungsabschnitt (72),
**dadurch gekennzeichnet, daß**
d) die Förderleitung gegen die Vertikale geneigt (schräg) angeordnet ist und

e) die drei Abschnitte (71, 73, 72) in die Förderleitung eingebaut oder selbst als Teil der Förderleitung ausgestaltet sind, derart, daß deren Mittelachsen und die Mittelachse der Förderleitung parallel zueinander ausgerichtet sind, insbesondere zusammenfallen.

2. Durchlaufwaage nach Anspruch 1, dadurch gekennzeichnet, daß der Wägeabschnitt (73) auf elektronischen Gewichtserfassungsmitteln (70) ruht oder daran aufgehängt ist, und im auslaufbereich des Wägeabschnittes (73) ein mit ihm verbundenes und von ihm gehaltertes verstellbares Verschlußorgan (76) derart ausgebildet und angeordnet ist, daß es in eine den Auslaufbereich des Wägeabschnittes (73) verschließende Stellung und in eine einen ungehinderten Nahrungsmittelaustritt gewährleistende Offenstellung bringbar ist.

3. Durchlaufwaage nach Anspruch 1 oder 2, dadurch gekennzeichnet, daß der Wägeabschnitt (73) einen zylindrischen Durchlaufraum aufweist, dessen Höhe 1, 5 bis 5 mal seinem Durchmesser entspricht.

4. Durchlaufwaage nach einem der vorstehenden Ansprüche, dadurch gekennzeichnet, daß das Verschlußorgan (76) als verschwenkbarer Abschlußschieber ausgestaltet ist.

5. Durchlaufwaage nach einem der vorstehenden Ansprüche, dadurch gekennzeichnet, daß eine Dosiereinrichtung (78) im Zuführleitungsabschnitt (71) vorgesehen und mit einem Vorgabegerät zur Einstellung einer vorwählbaren kontinuierlichen Durchsatzleistung verbunden ist.

6. Durchlaufwaage nach Anspruch 5, dadurch gekennzeichnet, daß ein Rechner (75) zur Ansteuerung des Vorgabegerätes vorgesehen ist, der vom Ausgang der Einrichtung zur Ermittlung des Nahrungsmitteldurchsatzes angesteuert wird, wobei der Rechner (75), das Vorgabegerät, die Dosiereinrichtung (78) und die Einrichtung zur Ermittlung des Nahrungsmitteldurchsatzes eine Durchsatzregeleinrichtung bilden.

7. Durchlaufwaage nach Anspruch 4 oder 5, dadurch gekennzeichnet, daß die Dosiereinrichtung (78) als Drehschieber oder als Dosierschnecke ausgebildet ist.

EP 0 431 525 A2

# Fig.1

9

Fig.2

Gewicht/Zeiteinheit

Fig 3

Fig. 4

Fig. 5